# NOUVEAU FASCICULE DE BREVET EUROPEEN

(11) **EP 2 667 266 B2**
(45) Date de publication et mention de la décision concernant l'opposition: **31.05.2017**
(45) Mention de la délivrance du brevet: 04.06.2014
(21) Numéro de dépôt: 13165621.7
(22) Date de dépôt: 26.04.2013
(51) Int. Cl.: G05B 9/02, G08B 26/00, H02H 5/10, H02H 11/00

(54) **Système de détection sécurisée intégrant des fonctions de diagnostic**
Gesichertes Erkennungssystem, das Diagnosefunktionen umfasst
Safety detection system with integrated diagnostic functions

(30) Priorité: 25.05.2012 FR 1254830
(43) Date de publication de la demande: 27.11.2013
(73) Titulaire: Schneider Electric Industries SAS, 92500 Rueil-Malmaison (FR)
(72) Inventeur: Auger, Marc, 16800 Soyaux (FR); Roger, Mireille, 16600 Ruelle sur Touvre (FR)
(74) Mandataire: Dufresne, Thierry

(56) Documents cités:
- EP-A1- 2 317 410
- EP-A2- 2 101 237
- WO-A1-2006/069691
- DE-A1- 19 715 013
- GB-A- 1 437 959
- GB-A- 2 321 124
- US-A- 4 290 055
- US-A- 4 568 919
- US-A- 5 434 457

## Description

### Domaine technique de l'invention

La présente invention se rapporte à un système de détection sécurisée intégrant des fonctions de diagnostic étendues.

Pour sécuriser l'accès à une machine située dans un local, il est connu de prévoir un système de détection sécurisée qui permet de ne pas autoriser le démarrage de la machine lorsque le moyen d'accès au local est ouvert. Comme un même local peut comporter plusieurs moyens d'accès, au moins un détecteur est prévu pour sécuriser chaque moyen d'accès. Dans cette situation, les détecteurs sont câblés en chaîne de sorte que les bornes de sortie d'un premier détecteur sont connectées aux bornes d'entrée d'un second détecteur, et ainsi de suite. Ainsi, le démarrage de la machine ne sera possible que lorsque toutes les sorties de sécurité des détecteurs seront actives, c'est-à-dire lorsque tous les moyens d'accès au local seront fermés. Dans les systèmes de détection sécurisée actuels, un module de sécurité additionnel est connecté aux bornes de sortie du dernier détecteur de la chaîne et à des moyens de démarrage de la machine. Deux relais de commande de la machine et une boucle de retour comportant un bouton de démarrage sont connectés au module de sécurité additionnel.

Une chaîne de détection est par exemple connue du document US4290055.

Cependant, deux types d'évènement entravent le démarrage de la machine : l'ouverture d'un moyen d'accès et la rupture du câblage dans la chaîne. L'ouverture d'un moyen d'accès est associée à un fonctionnement normal du système. La rupture du câblage est associée à un fonctionnement défectueux ou frauduleux.

Dans une chaîne de détection, chaque détecteur est généralement équipé d'un voyant lumineux indiquant l'état ouvert ou fermé du moyen d'accès surveillé. Dans une installation à plusieurs accès, si un moyen d'accès reste ouvert, l'opérateur doit alors contrôler chaque détecteur pour savoir lequel empêche le démarrage de la machine.

Pour pallier cet inconvénient, des méthodes ont été proposées pour centraliser l'état des détecteurs de la chaîne de détection au niveau du pupitre de commande.

L'une de ces méthodes consiste à ajouter une connexion directe entre chaque détecteur de la chaîne de détection et l'automate programmable en vue de centraliser l'état de tous les détecteurs et d'identifier le détecteur indiquant un moyen d'accès ouvert. Cependant, ce système nécessite un câblage important et un automate doté d'un grand nombre d'entrées.

Une autre méthode consiste à connecter en réseau les détecteurs et l'automate programmable de sécurité, par exemple au moyen d'un bus. L'automate programmable de sécurité est chargé d'analyser l'état de surveillance de chaque détecteur, en parallèle de la chaîne de détection. Cette méthode est d'un coût élevé et s'avère difficile à mettre en oeuvre.

Les méthodes existantes permettant d'identifier les moyens d'accès ouverts sont satisfaisantes pour un diagnostic en fonctionnement normal du système de détection, comme c'est le cas dans le document antérieur US4290055. Cependant aucune ne permet de différencier une rupture du câblage d'un fonctionnement normal et d'apporter un diagnostic en cas de fonctionnement défectueux ou frauduleux.

### Etat de la technique

Le but de l'invention est de proposer un système de détection sécurisée employant des détecteurs de sécurité connectés en chaîne et dans lequel il est possible de :
- centraliser les états de surveillance des détecteurs de la chaîne de détection,
- connaître l'état de surveillance, ouvert ou fermé, de chaque détecteur sans recourir à un câblage important,
- détecter une rupture de la chaîne de détection,
- distinguer les différents types de défauts,
- localiser un défaut dans la chaîne de détection,
- analyser et interpréter le diagnostic en cohérence avec les temps de réponse de la chaîne de détection,
- conditionner le démarrage de la machine.

### Exposé de l'invention

Ce but est atteint par un système de détection sécurisée comportant :
- au moins un premier détecteur et un deuxième détecteur, chaque détecteur comportant deux bornes d'entrée connectées à ses entrées logiques de sécurité, deux bornes de sortie connectées à ses sorties logiques de sécurité et deux bornes d'alimentation connectées à deux lignes d'alimentation électrique, les deux bornes de sortie du premier détecteur étant connectées aux deux bornes d'entrée du deuxième détecteur et les deux bornes de sortie du deuxième détecteur étant connectées directement ou indirectement, via un module de sécurité, à des organes de commande de l'application à sécuriser, de manière à former une chaîne de détection,
- les sorties logiques de sécurité de chaque détecteur étant activées en fonction d'un état de surveillance dudit détecteur,
- le premier détecteur comportant une interface de sortie de diagnostic et le deuxième détecteur comportant une interface d'entrée de diagnostic, connectée uniquement à l'interface de sortie de diagnostic du premier détecteur, et une interface de sortie de diagnostic, de manière à former une ligne de diagnostic,
- le premier détecteur comportant des moyens de génération d'une information de diagnostic comportant son état de surveillance et des moyens d'émission de cette information de diagnostic sur la ligne de diagnostic à destination du deuxième détecteur,
- le deuxième détecteur étant agencé pour enrichir l'information de diagnostic reçue en y insérant son état de surveillance,
- le système comportant un module de diagnostic connecté à l'interface de sortie de diagnostic du deuxième détecteur et destiné à recevoir l'information de diagnostic, à l'interpréter et à intervenir sur la condition de démarrage de l'application.

Selon une particularité, l'information de diagnostic se présente sous la forme d'une trame de diagnostic comportant un bit de départ, un ou plusieurs bits reflétant chacun l'état de surveillance de chaque détecteur de la chaîne de détection et un bit de stop.

Selon une autre particularité, les détecteurs de la chaîne sont agencés pour mettre en oeuvre une phase d'initialisation permettant de déterminer quel est le premier détecteur de la chaîne de détection destiné à la génération de l'information de diagnostic.

Selon une autre particularité, chaque détecteur comporte des moyens de mémorisation de sa position relativement au premier détecteur de la chaîne.

Selon une autre particularité, le premier détecteur de la chaîne de détection est agencé pour émettre des trames de diagnostic séparées entre elles par un intervalle de temps régulier déterminé.

Selon une autre particularité, chaque détecteur est agencé pour lancer une procédure dite de "timeout" dans laquelle il génère une trame dite de "timeout" lorsqu'il n'a pas reçu la trame de diagnostic dans un intervalle de temps déterminé.

Selon une autre particularité, un détecteur générant une trame de "timeout" est agencé pour maintenir ses sorties logiques de sécurité inactives, empêchant tout redémarrage de l'application jusqu'à la prochaine remise sous tension.

Selon une autre particularité, l'intervalle de temps déclencheur de la procédure de "timeout" est différent pour chaque détecteur de la chaîne.

### Brève description des figures

D'autres caractéristiques et avantages vont apparaître dans la description détaillée qui suit faite en regard des dessins annexés dans lesquels :
- la figure 1 illustre le contexte d'utilisation d'un système de détection sécurisée,
- la figure 2 représente l'architecture fonctionnelle d'un détecteur employé dans le système de détection de l'invention,
- la figure 3 représente un système de détection sécurisée selon l'invention,
- la figure 4 représente un premier diagramme temporel illustrant le principe de diagnostic du système de détection de l'invention,
- la figure 5 représente un deuxième diagramme temporel illustrant le principe de diagnostic du système de détection de l'invention.

### Description détaillée d'au moins un mode de réalisation

Dans la suite de la description, nous employons l'expression "état de surveillance" pour définir l'état 1 ou l'état 0 du détecteur, c'est-à-dire par exemple l'état fermé (1) ou l'état ouvert (0) d'un moyen d'accès si le détecteur est destiné à la surveillance d'un moyen d'accès.

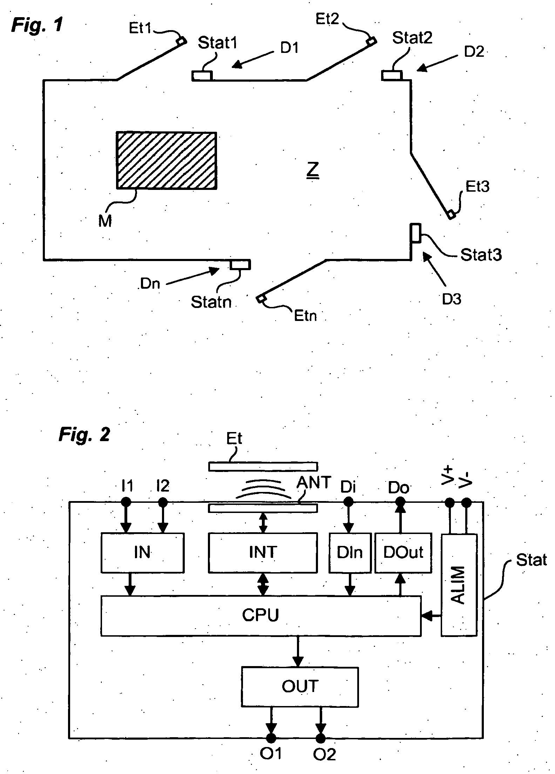

L'invention concerne un système de détection sécurisée. Un tel système de détection sécurisée est par exemple employé pour sécuriser le démarrage d'une application, par exemple d'une machine, située dans un local Z. La figure 1 illustre cet exemple. Le système de détection sécurisée comporte plusieurs détecteurs D1, D2, D3, ... Dn connectés en chaîne, chaque détecteur étant dédié à la surveillance d'un moyen d'accès au local Z. Le démarrage de la machine M n'est possible que si toutes les sorties de sécurité des détecteurs sont actives, c'est-à-dire lorsque tous les moyens d'accès au local sont fermés.

Les détecteurs sont par exemple de type à « radio-identification » (ci-après RFID). Bien entendu, d'autres technologies que la RFID pourraient être employées, comme par exemple la détection par effet hall, optique ou employant des contacts magnétiques. Dans la suite de la description, nous nous intéresserons à des détecteurs de type RFID.

Dans le contexte illustré par la figure 1, une étiquette Et1, Et2, Et3 électronique RFID est par exemple fixée au moyen d'accès, tandis qu'une station de lecture/écriture Stat1, Stat2, Stat3 est fixée sur le bâti du moyen d'accès. Lorsque l'étiquette Et1, Et2, Et3 électronique RFID se trouve dans le champ de la station, cela signifie que le moyen d'accès est fermé et donc que les sorties de sécurité du détecteur sont actives.

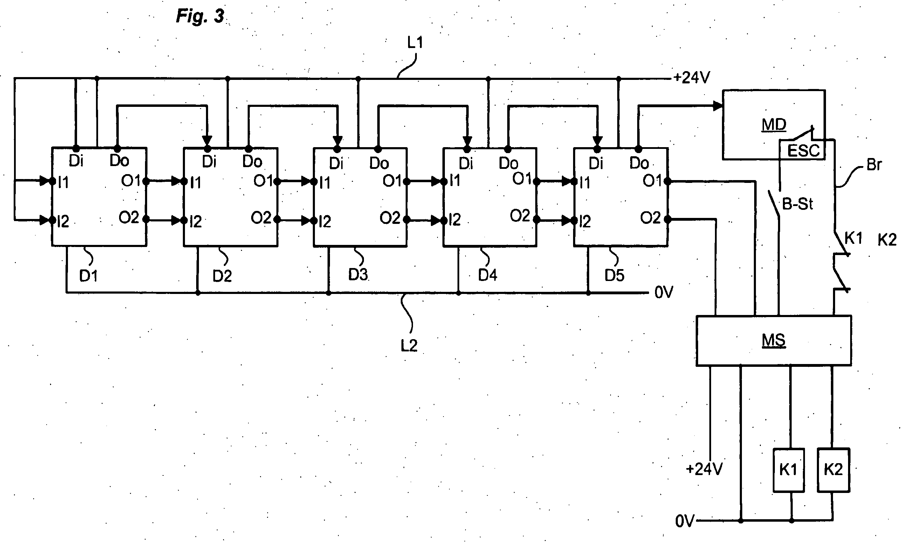

Dans la suite de la description, on considérera une chaîne de détection qui comporte un nombre n de détecteurs, n étant supérieur ou égal à deux. Le détecteur de rang n est situé au bout de la chaîne de détection. Sur la figure 3, le système de détection sécurisée de l'invention comporte cinq détecteurs D1, D2, D3, D4, D5.

Comme représenté sur la figure 2, chaque station de lecture/écriture Stat d'un détecteur comporte deux bornes d'entrée I1, I2 de sécurité connectées sur ses entrées

IN logiques de sécurité (ci-après entrées de sécurité), deux bornes de sortie O1, O2 de sécurité connectées sur ses sorties OUT logiques de sécurité (ci-après sorties de sécurité) et deux bornes d'alimentation (V-, V+) connectées à des moyens de gestion de l'alimentation ALIM. La station Stat comporte également des moyens de traitement CPU recevant l'état des entrées de sécurité et déterminant l'état des sorties de sécurité. Si le détecteur est de type RFID, il comporte également une interface INT RFID et une antenne ANT lui permettant de communiquer avec une étiquette Et électronique RFID.

Selon l'invention, chaque détecteur comporte également une borne d'entrée Di de diagnostic connectée à une interface d'entrée de diagnostic Dln et une borne de sortie Do de diagnostic connectée à une interface de sortie de diagnostic DOut. Les moyens de traitement CPU d'un détecteur sont aptes à générer une information de diagnostic à envoyer sur son interface de sortie de diagnostic DOut.

Comme représenté sur la figure 3, dans le système de détection sécurisée de l'invention, les bornes de sortie O1, O2 de sécurité du détecteur de rang 1 sont connectées aux bornes d'entrée I1, I2 de sécurité du détecteur de rang 2, les bornes de sortie O1, O2 de sécurité du détecteur de rang 2 sont connectées aux bornes d'entrée I1, I2 de sécurité du détecteur de rang 3 et ainsi de suite. Les bornes de sortie O1, O2 de sécurité du détecteur de rang n-1 sont ainsi connectées aux bornes d'entrée I1, I2 de sécurité du détecteur de rang n.

Un module de sécurité MS additionnel est par exemple connecté en bout de chaîne. Ce module de sécurité MS additionnel gère le mode de démarrage de la machine M et surveille la boucle de retour Br, c'est-à-dire l'état des relais de commande K1, K2 de la machine. En variante de réalisation, selon l'invention, les bornes de sortie O1, O2 du détecteur de rang n sont connectées directement aux deux relais de commande K1, K2 de la machine M. La boucle de retour Br, permettant de surveiller l'état des deux relais K1, K2, est connectée entre une borne d'entrée de démarrage et une borne de sortie de test du détecteur de rang n (variante non représentée). Un bouton de démarrage B-St de la machine est placé sur cette boucle de retour Br.

Le démarrage de la machine M est effectué en appuyant sur le bouton de démarrage B-St et n'est possible que si les sorties de sécurité du détecteur de rang n sont actives et si la boucle de retour Br est fermée.

Les deux bornes d'alimentation (V-, V+) de chaque détecteur de la chaîne sont connectées à deux lignes d'alimentation s'étendant sur toute la longueur de la chaîne et connectées à une source d'alimentation. La première ligne d'alimentation L1 est à un potentiel électrique nul et la deuxième ligne d'alimentation L2 est à un potentiel électrique positif, par exemple fixé à +24 Volts. Les deux bornes d'entrée de sécurité du premier détecteur de la chaîne sont connectées à la deuxième ligne d'alimentation L2 pour activer automatiquement les deux entrées IN de sécurité du premier détecteur de la chaîne.

Pour réaliser le câblage entre deux détecteurs de la chaîne, on utilise par exemple deux organes d'interconnexion, en forme de T ou de Y. Un organe d'interconnexion est associé à chaque détecteur de la chaîne. Ainsi, le système de détection comporte également n organes d'interconnexion identiques. Bien entendu, il serait possible de se passer des organes d'interconnexion, en intégrant, dans chaque détecteur, la configuration de câblage réalisée par chacun des organes d'interconnexion.

Les organes d'interconnexion sont agencés pour assurer la continuité des lignes d'alimentation L1, L2 et pour connecter les bornes de sortie O1, O2 d'un détecteur sur les bornes d'entrée I1, I2 du détecteur suivant.

En fonctionnement normal, si tous les moyens d'accès sont fermés, les sorties OUT de sécurité des détecteurs des rangs 1 à n-1 sont actives et les entrées IN de sécurité du détecteur de rang n, situé en bout de chaîne, sont alors actives. Les sorties OUT de sécurité du détecteur de rang n seront actives si l'étiquette RFID est à portée du lecteur. La boucle de retour Br fermée, c'est-à-dire les deux relais de surveillance K1, K2 fermés, et le bouton de démarrage B-St enclenché, conditionnent le démarrage du module de sécurité MS, donc de la machine. Si un moyen d'accès est ouvert, les sorties OUT de sécurité du détecteur de ce moyen d'accès sont inactives. Les sorties OUT de sécurité et les entrées IN de sécurité des détecteurs étant chaînées, les sorties OUT de sécurité et les entrées IN de sécurité de tous les détecteurs situés après ledit détecteur seront alors toutes inactives.

Selon l'invention, en plus de former une chaîne de détection sécurisée, les détecteurs de la chaîne forment une ligne de diagnostic. La borne de sortie Do de diagnostic du détecteur de rang 1 est ainsi connectée uniquement à la borne d'entrée Di de diagnostic du détecteur de rang 2 et la borne de sortie Do de diagnostic du détecteur de rang 2 est connectée uniquement à la borne d'entrée Di de diagnostic du détecteur de rang 3 et ainsi de suite jusqu'au détecteur de rang n, dont la borne de sortie Do de diagnostic est connectée à un module de diagnostic MD, faisant partie du système de détection sécurisée de l'invention. Les organes d'interconnexion définis ci-dessus sont par exemple agencés pour réaliser le câblage de diagnostic entre les détecteurs de la chaîne.

La ligne de diagnostic ainsi constituée permet de transférer une information de diagnostic. Chaque détecteur de la chaîne enrichit l'information de diagnostic en indiquant son état de surveillance, c'est-à-dire l'état du moyen d'accès, ouvert ou fermé, qu'il surveille, et envoie l'information enrichie au détecteur suivant situé dans la chaîne. La ligne de diagnostic s'étendant entre chaque détecteur est par exemple réalisée sous la forme d'un seul fil.

La borne d'entrée Di de diagnostic du premier détecteur D1 de la chaîne est raccordée à la deuxième ligne d'alimentation L2 pour activer automatiquement l'interface d'entrée de diagnostic Dln du premier détecteur D1.

Le module de diagnostic MD, situé en bout de chaîne, récupère l'information de diagnostic et détermine à partir de celle-ci l'état de surveillance de chaque détecteur de la chaîne. Le module de diagnostic MD et le module de sécurité MS peuvent être réalisés sous la forme de deux unités séparées ou regroupés au sein d'un même équipement.

L'information de diagnostic est initiée par le premier détecteur D1 de la chaîne. L'identification du premier détecteur de la chaîne est par exemple réalisée à la première mise sous tension du système lors d'une phase d'initialisation. A la première mise sous tension du système, chaque détecteur envoie sur son interface de sortie de diagnostic DOut une trame déterminée, par exemple 00H, sans rapport avec son état de surveillance. Ainsi, le détecteur qui n'a reçu aucun signal sur son interface d'entrée de diagnostic Dln s'identifie comme le premier détecteur de la chaîne.

Une fois la phase d'initialisation terminée, le premier détecteur D1 de la chaîne génère l'information de diagnostic. Cette information de diagnostic s'assimile dans notre exemple à une trame de diagnostic et contient :
- un bit de départ St,
- un bit indiquant l'état de surveillance du détecteur (c'est-à-dire moyen d'accès ouvert=0 et moyen d'accès fermé=1),
- un bit de séparation Sn (fixé à 0),
- d'autres bits fixés à 1,
- un bit de stop Sp situé à la fin de la trame.

Les détecteurs suivants dans la chaîne sont en attente de la trame de diagnostic sur leur interface d'entrée de diagnostic Dln. Lorsque la trame est reçue par un détecteur, celui-ci décale les données indiquant l'état de surveillance des détecteurs précédents puis ajoute, entre ces données et le bit de départ St, un bit indiquant son état de surveillance. Le détecteur envoie alors la trame ainsi complétée sur son interface de sortie de diagnostic DOut.

Le bit de séparation Sn est le dernier bit fixé à 0 de la trame. Chaque détecteur est ainsi en mesure de savoir combien de détecteurs se trouvent avant lui dans la chaîne, en comptant tout simplement le nombre de bits entre le bit de départ St et le bit de séparation Sn. Chaque détecteur est en mesure de mémoriser sa position par rapport au premier détecteur de la chaîne de sécurité. Chaque détecteur est de même en mesure de connaître et mémoriser l'état de surveillance des détecteurs se trouvant avant lui dans la chaîne.

Le dernier bit de la trame de diagnostic est toujours fixé à 1 et ne peut pas être employé pour transmettre l'état d'un moyen d'accès. Grâce à ce bit, le module de diagnostic MD sait différencier une trame d'initialisation d'une trame de diagnostic, même si tous les moyens d'accès sont ouverts.

Des trames de diagnostic sont par exemple envoyées à des intervalles de temps Td prédéfinis, la fréquence d'émission étant fixée par le premier détecteur D1 de la chaîne.

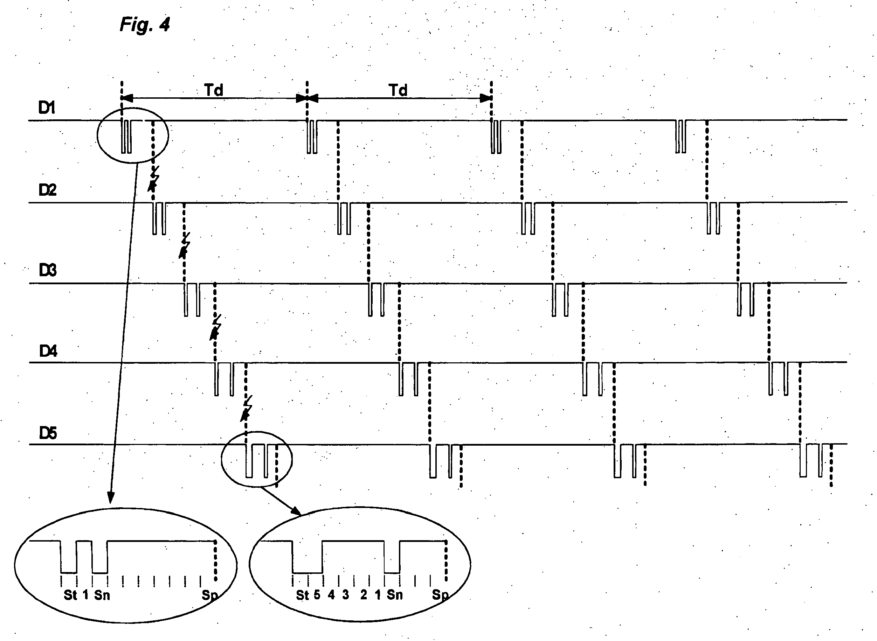

La figure 4 illustre la diffusion d'une trame de diagnostic dans le système de détection à cinq détecteurs connectés en chaîne. Ce diagramme temporel illustre une situation dans laquelle les moyens d'accès surveillés par les détecteurs de rang 1 à 4 sont fermés et le moyen d'accès surveillé par le détecteur de rang 5 est ouvert.

Sur ce diagramme temporel :
- Le premier détecteur D1 émet la première trame de diagnostic qui comporte un bit de départ St fixé à 0, un bit représentant son état de surveillance, fixé à 1, car le moyen d'accès surveillé est fermé, un bit de séparation Sn, toujours fixé à 0 et les autres bits fixés à 1 jusqu'au bit de stop Sp. Cette trame de diagnostic est envoyée sur l'interface d'entrée de diagnostic Dln du deuxième détecteur D2.
- Le deuxième détecteur D2 qui reçoit la trame de diagnostic rajoute entre le bit de départ St et le bit représentatif de l'état de surveillance du premier détecteur, un bit correspondant à son propre état de surveillance. Ce bit est fixé à 1 car le moyen d'accès surveillé par le deuxième détecteur D2 est fermé. Le deuxième détecteur D2 envoie la trame de diagnostic, ainsi enrichie, au troisième détecteur.
- Le troisième détecteur D3 réalise de même en tenant compte de son état de surveillance. Le bit ajouté est donc fixé à 1 car le moyen d'accès surveillé par le troisième détecteur D3 est fermé. Le troisième détecteur D3 envoie la trame de diagnostic complétée au quatrième détecteur D4.
- Le quatrième détecteur D4 enrichit la trame de diagnostic de la même manière que précédemment et l'envoie au cinquième détecteur D5 de la chaîne.
- Le cinquième détecteur D5 complète la trame en rajoutant, entre le bit de départ St et le bit représentatif de l'état de surveillance du quatrième détecteur D4, un bit fixé à 0 car le moyen d'accès surveillé par le cinquième détecteur D5 est ouvert.

Après un intervalle de temps Td prédéfini, le premier détecteur D1 génère une nouvelle trame de diagnostic.

Bien entendu, la longueur de la trame de diagnostic dépend du nombre de détecteurs présents dans la chaîne. Elle sera d'un octet si la chaîne comporte de deux à six détecteurs, de deux octets si la chaîne comporte entre sept et quatorze détecteurs et de trois octets si la chaîne comporte entre quinze et vingt-deux détecteurs. Dans tous les cas, la longueur de la trame de diagnostic reste faible, ce qui permet d'analyser son contenu rapidement, en cohérence avec les temps de réponse de la chaîne de sécurité.

Selon l'invention, si un détecteur ne reçoit aucune donnée de diagnostic dans la fenêtre de temps prédéfinie, une procédure dite de "timeout" est enclenchée par ledit détecteur. La procédure de "timeout" traduit un fonctionnement anormal dans la chaîne, généralement une rupture du câblage ou un défaut matériel. Dans cette situation, un état inactif apparaît sur les entrées I1, I2 du détecteur qui enclenche la procédure de "timeout". Les sorties OUT de sécurité dudit détecteur ainsi que celles de tous les détecteurs placés après dans la chaîne de sécurité se trouvent dans l'état inactif. Le démarrage de la machine M est inhibé jusqu'à la prochaine mise sous-tension.

Lorsqu'un détecteur met en place une procédure de "timeout", c'est-à-dire qu'il n'a pas reçu de trame de diagnostic dans une fenêtre de temps prédéfinie, il génère une trame de "timeout" à destination du détecteur suivant dans la chaîne de détection. Le détecteur qui initie la trame de "timeout", c'est-à-dire le premier détecteur de la chaîne qui n'a rien reçu, affecte la valeur 0 aux bits représentatifs des états de surveillance des détecteurs situés en amont par rapport à lui. Une trame de "timeout" est ensuite générée à des intervalles de temps définis Tt, la fréquence d'émission de la trame de "timeout" étant fixée par le détecteur qui initie la procédure de "timeout".

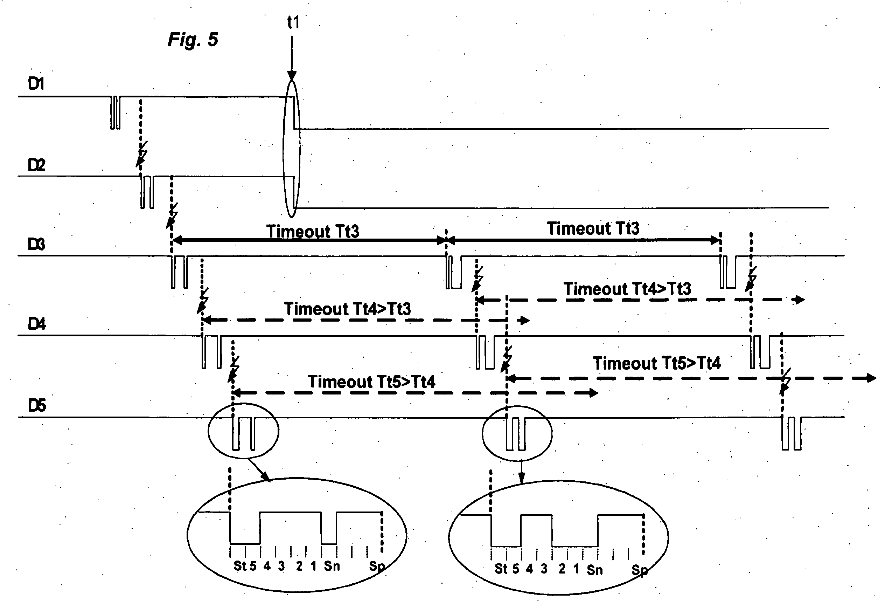

La figure 5 illustre la mise en place d'une procédure de "timeout". Le diagramme temporel de la figure 5 illustre une situation dans laquelle à un instant t1 donné, la ligne de diagnostic reliant le deuxième détecteur D2 au troisième détecteur D3 est coupée. Sur ce diagramme temporel :
- La première trame de diagnostic est émise par le premier détecteur D1 et diffusée normalement jusqu'au cinquième détecteur D5.
- A un instant t1, la ligne reliant le deuxième détecteur D2 au troisième détecteur D3 est coupée, empêchant toute nouvelle trame de diagnostic de parvenir jusqu'au troisième détecteur D3.
- Le troisième détecteur D3 n'ayant rien reçu dans l'intervalle de temps Tt3 prévu, celui-ci génère une trame de "timeout". Dans cette trame de "timeout", le troisième détecteur fixe à 0 les bits représentatifs des états de surveillance des premier et deuxième détecteurs D1, D2 situés en amont.
- Le quatrième détecteur D4 et le cinquième détecteur D5 reçoivent la trame de "timeout" et l'enrichissent comme précédemment en ajoutant chacun un bit correspondant à leur état de surveillance.

Afin que chaque détecteur ait le temps de lire une trame de "timeout" avant de tomber lui-même en "timeout", tous les détecteurs n'ont pas la même durée de "timeout" Tt. Sur la figure 5, on a ainsi : Tt4>Tt3 et Tt5>Tt4. Il est par exemple possible de fixer une valeur de "timeout" pour un détecteur x de la chaîne Ttx qui soit fonction du nombre de détecteurs présents avant lui dans la chaîne. Ttx = Tt1 + (x - 1)Δt avec :
- Tt1 la valeur de "timeout" initiale définie à partir de la période d'émission Td d'une trame de diagnostic fixée par le premier détecteur,
- Δt le supplément de temps à ajouter à chaque détecteur,
- x la position du détecteur dans la chaîne.

A chaque fois qu'un détecteur de la chaîne entre en "timeout" ou reçoit des trames de "timeout" à la période du "timeout", il va interdire le redémarrage de la machine M jusqu'à la prochaine remise sous tension, en maintenant ses sorties OUT de sécurité désactivées. A la réception d'une trame de "timeout", le module de diagnostic MD ouvre un contact ESC situé sur la boucle de retour Br afin d'empêcher le redémarrage de la machine M sans une remise sous tension préalable.

D'autres événements peuvent également conduire à une interdiction de redémarrage de la machine M jusqu'à la prochaine remise sous-tension, par exemple :
- Entrée de diagnostic en permanence à 0. Le bouchon de fin de ligne ou un cordon situé en amont du premier détecteur D1 est débranché.
- Emission d'une trame de diagnostic valant 00H alors que la phase d'initialisation a déjà été effectuée. Le détecteur précédent dans la chaîne a été débranché puis rebranché.
- Réception d'une trame d'initialisation différente de 00H. Le détecteur qui a reçu la trame de diagnostic a certainement été débranché puis rebranché.
- Nombre incorrect de bits dans la trame de diagnostic. Un ou plusieurs détecteurs ont par exemple été ajoutés dans la chaîne de détection.

Comme décrit précédemment, la plupart des violations de câblage est vue par les détecteurs eux-mêmes, qui, en maintenant leurs sorties OUT de sécurité inactives, empêchent tout redémarrage de la machine M.

Le module de diagnostic MD gère les violations de câblage restant possibles si le câble final situé entre le dernier détecteur et le pupitre de commande n'est pas sécurisé. Si ledit câble final est débranché, le module de diagnostic MD empêche le redémarrage de la machine avant toute remise sous-tension, en ouvrant le contact ESC.

## Revendications

1. Système de détection sécurisée comportant :
- au moins un premier détecteur et un deuxième détecteur, chaque détecteur comportant deux bornes d'entrée (I1, I2) connectées à ses entrées (IN) logiques de sécurité, deux bornes de sortie (O1, O2) connectées à ses sorties (OUT) logiques de sécurité et deux bornes d'alimentation (V-, V+) connectées à deux lignes d'alimentation électrique, les deux bornes de sortie (O1, O2) du premier détecteur étant connectées aux deux bornes d'entrée (I1, I2) du deuxième détecteur et les deux bornes de sortie (O1, O2) du deuxième détecteur étant connectées directement ou indirectement, via un module de sécurité, à des organes de commande (K1, K2) de l'application à sécuriser, de manière à former une chaîne de détection,
- les sorties (OUT) logiques de sécurité de chaque détecteur étant activées en fonction d'un état de surveillance dudit détecteur,
- le premier détecteur comporte une interface de sortie de diagnostic (DOut) et le deuxième détecteur comporte une interface d'entrée de diagnostic (Dln), connectée uniquement à l'interface de sortie de diagnostic (DOut) du premier détecteur, et une interface de sortie de diagnostic (DOut), de manière à former une ligne de diagnostic,
- **caractérisé en ce que** :
- le premier détecteur comporte des moyens de génération d'une information de diagnostic, ladite information de diagnostic générée étant initiée par le premier détecteur et comportant son état de surveillance, et des moyens d'émission de cette information de diagnostic sur la ligne de diagnostic à destination du deuxième détecteur,
- le deuxième détecteur est agencé pour enrichir l'information de diagnostic reçue en y insérant son état de surveillance,
- le système comporte un module de diagnostic (MD) connecté à l'interface de sortie de diagnostic (DOut) du deuxième détecteur et destiné à recevoir l'information de diagnostic, à l'interpréter et à intervenir sur condition de démarrage de l'application.

2. Système selon la revendication 1, **caractérisé en ce que** l'information de diagnostic se présente sous la forme d'une trame de diagnostic comportant un bit de départ (St), un ou plusieurs bits reflétant chacun l'état de surveillance de chaque détecteur de la chaîne de détection et un bit de stop (Sp).

3. Système selon la revendication 1 ou 2, **caractérisé en ce que** les détecteurs de la chaîne sont agencés pour mettre en oeuvre une phase d'initialisation permettant de déterminer quel est le premier détecteur de la chaîne de détection, destiné à la génération de l'information de diagnostic.

4. Système selon la revendication 3, **caractérisé en ce que** chaque détecteur comporte des moyens de mémorisation de sa position relativement au premier détecteur de la chaîne.

5. Système selon l'une des revendications 1 à 4, **caractérisé en ce que** le premier détecteur de la chaîne de détection est agencé pour émettre des trames de diagnostic séparées entre elles par un intervalle de temps (Td) régulier déterminé.

6. Système selon l'une des revendications 1 à 5, **caractérisé en ce que** chaque détecteur est agencé pour lancer une procédure dite de "timeout" dans laquelle il génère une trame dite de "timeout" lorsqu'il n'a pas reçu la trame de diagnostic dans un intervalle de temps (Tt) déterminé.

7. Système selon la revendication 6, **caractérisé en ce qu'**un détecteur générant une trame de "timeout" est agencé pour maintenir ses sorties logiques de sécurité inactives, empêchant tout redémarrage de l'application jusqu'à la prochaine remise sous tension.

8. Système selon la revendication 6 ou 7, **caractérisé en ce que** l'intervalle de temps déclencheur de la procédure de "timeout" est différent pour chaque détecteur de la chaîne.

## Patentansprüche

1. System zur gesicherten Erfassung, das aufweist:
- mindestens einen ersten Detektor und einen zweiten Detektor, wobei jeder Detektor zwei Eingangsklemmen (I1, I2), die mit seinen logischen Sicherheitseingängen (IN) verbunden sind, zwei Ausgangsklemmen (O1, O2), die mit seinen logischen Sicherheitsausgängen (OUT) verbunden sind, und zwei Versorgungsklemmen (V-, V+) aufweist, die mit zwei elektrischen Versorgungsleitungen verbunden sind, wobei die zwei Ausgangsklemmen (O1, O2) des ersten Detektors mit den zwei Eingangsklemmen (I1, I2) des zweiten Detektors und die zwei Ausgangsklemmen (O1, O2) des zweiten Detektors direkt oder indirekt über ein Sicherheitsmodul mit Steuerorganen (K1, K2) der zu sichernden Anwendung verbunden sind, um eine Erfassungskette zu formen,
- wobei die logischen Sicherheitsausgänge (OUT) jedes Detektors abhängig von einem Überwachungszustand des Detektors aktiviert werden,
- wobei der erste Detektor eine Diagnose-Ausgangsschnittstelle (DOut) und der zweite Detektor eine Diagnose-Eingangsschnittstelle (DIn), die nur mit der Diagnose-Ausgangsschnittstelle (DOut) des ersten Detektors verbunden ist, und eine Diagnose-Ausgangsschnittstelle (DOut) aufweist, um eine Diagnoseleitung zu bilden,
**dadurch gekennzeichnet, dass**:
- der erste Detektor Einrichtungen zur Erzeugung einer Diagnoseinformation, die von dem ersten Detektor eingeführt ist und die seinen Überwachungszustand aufweist, und Einrichtungen zum Senden dieser Diagnoseinformation auf der Diagnoseleitung zum zweiten Detektor aufweist,
- der zweite Detektor eingerichtet ist, um die empfangene Diagnoseinformation anzureichern, indem er seinen Überwachungszustand in sie einfügt,
- das System ein Diagnosemodul (MD) aufweist, das mit der Diagnose-Ausgangsschnittstelle (DOut) des zweiten Detektors verbunden und dazu bestimmt ist, die Diagnoseinformation zu empfangen, sie zu interpretieren und auf die Startbedingung der Anwendung einzuwirken.

2. System nach Anspruch 1, **dadurch gekennzeichnet, dass** die Diagnoseinformation in Form eines Diagnoserahmens vorliegt, der ein Startbit (St), ein oder mehrere Bits, die je den Überwachungszustand jedes Detektors der Erfassungskette reflektieren, und ein Stoppbit (Sp) aufweist.

3. System nach Anspruch 1 oder 2, **dadurch gekennzeichnet, dass** die Detektoren der Kette eingerichtet sind, um eine Initialisierungsphase durchzuführen, die es ermöglicht festzustellen, welcher der erste Detektor der Erfassungskette ist, der zur Erzeugung der Diagnoseinformation bestimmt ist.

4. System nach Anspruch 3, **dadurch gekennzeichnet, dass** jeder Detektor Einrichtungen zur Speicherung seiner Position bezüglich des ersten Detektors der Kette aufweist.

5. System nach einem der Ansprüche 1 bis 4, **dadurch gekennzeichnet, dass** der erste Detektor der Erfassungskette eingerichtet ist, um Diagnoserahmen zu senden, die durch ein bestimmtes regelmäßiges Zeitintervall (Td) voneinander getrennt sind.

6. System nach einem der Ansprüche 1 bis 5, **dadurch gekennzeichnet, dass** jeder Detektor eingerichtet ist, um eine "Timeout" genannte Prozedur zu starten, in der er einen "Timeout" genannten Rahmen erzeugt, wenn er den Diagnoserahmen nicht in einem bestimmten Zeitintervall (Tt) empfangen hat.

7. System nach Anspruch 6, **dadurch gekennzeichnet, dass** ein einen "Timeout"-Rahmen erzeugender Detektor eingerichtet ist, um seine logischen Sicherheitsausgänge inaktiv zu halten, was jeden Neustart der Anwendung bis zum nächsten Wiedereinschalten verhindert.

8. System nach Anspruch 6 oder 7, **dadurch gekennzeichnet, dass** das die "Timeout"-Prozedur auslösende Zeitintervall für jeden Detektor der Kette unterschiedlich ist.

## Claims

1. Safety detection system comprising:
- at least one first detector and one second detector, each detector comprising two input terminals (I1, I2) connected to its safety logic inputs (IN), two output terminals (O1, O2) connected to its safety logic outputs (OUT) and two supply terminals (V-, V+) connected to two electrical supply lines, the two output terminals (O1, O2) of the first detector being connected to the two input terminals (I1, I2) of the second detector and the two output terminals (O1, O2) of the second detector being connected directly, or indirectly via a safety module, to members (K1, K2) for controlling the application to be secured, so as to form a detection chain;
- the safety logic outputs (OUT) of each detector being activated depending on a surveillance state of said detector,
- the first detector comprises a diagnostic output interface (Dout), and the second detector comprises a diagnostic input interface (Dln), connected only to the diagnostic output interface (DOut) of the first detector, and a diagnostic output interface (DOut), so as to form a diagnostic line;
**characterised in that**:
- the first detector comprises means for generating diagnostic information, said generated diagnostic information being initiated by the first detector and comprising its surveillance state, and means for sending this diagnostic information on the diagnostic line to the second detector;
- the second detector is designed to enrich the diagnostic information received by inserting therein its surveillance state; and
- the system comprises a diagnostic module (MD) connected to the diagnostic output interface (DOut) of the second detector and intended to receive the diagnostic information, to interpret it, and to control the start-up of the application.

2. System according to Claim 1, **characterised in that** the diagnostic information takes the form of a diagnostic frame comprising a start bit (St), one or more bits each reflecting the surveillance state of each detector in the detection chain, and a stop bit (Sp).

3. System according to either of Claims 1 and 2, **characterised in that** the detectors in the chain are designed to implement an initialisation phase making it possible to determine which detector is the first detector in the detection chain, this detector being intended to generate the diagnostic information.

4. System according to Claim 3, **characterised in that** each detector comprises means for memorising its position relative to the first detector in the chain.

5. System according to one of Claims 1 to 4, **characterised in that** the first detector in the detection chain is designed to emit diagnostic frames separated from each other by a set regular time interval (Td).

6. System according to one of Claims 1 to 5, **characterised in that** each detector is designed to launch what is called a timeout procedure, in which it generates what is called a timeout frame, when it does not receive the diagnostic frame in a set time interval (Tt).

7. System according to Claim 6, **characterised in that** a detector generating a timeout frame is designed to deactivate its safety logic outputs, preventing start-up of the application, until it is restarted.

8. System according to either of Claims 6 and 7, **characterised in that** the time interval that triggers the timeout procedure is different for each detector in the chain.
